# FASCICULE DE BREVET EUROPEEN

(11) **EP 0 459 916 B1**
(45) Date de publication et mention de la délivrance du brevet: **12.04.1995**
(21) Numéro de dépôt: 91420150.4
(22) Date de dépôt: 06.05.1991
(51) Int. Cl.: C04B 35/52, F16D 69/02

(54) **Eléments de friction en matériau composite carbone-carbone à texture différentielle, procédés et dispositifs pour les fabriquer**
Reibelemente aus Kohlenstoff-Kohlenstoff-Verbundwerkstoff mit verschiedener Textur, Verfahren und Vorrichtungen zu ihrer Herstellung
Carbon-carbon composite material friction elements having a differential texture, processes and devices for their fabrication

(30) Priorité: 10.05.1990 FR 9006488; 25.03.1991 FR 9103827
(43) Date de publication de la demande: 04.12.1991
(73) Titulaire: LE CARBONE LORRAINE, 92400 Courbevoie (FR)
(72) Inventeur: Bommier, Christophe, F-75015 Paris (FR); Chareire, Jean-Louis, F-92300 Levallois-Perret (FR)
(74) Mandataire: Séraphin, Léon

(56) Documents cités:
- GB-A- 2 027 418
- GB-A- 2 148 187
- US-A- 3 956 548
- WORLD PATENT INDEX LATEST DATABASE, semaine 19, 1987, accés no. 87-132473, Derwent Publications Ltd, Londres, GB; & JP-A-62 072 566 (DAINIPPON INK CHEM. K.K.) 03-04-1987

## Description

### DOMAINE DE L'INVENTION

L'invention concerne le domaine des matériaux de friction en matériau composite carbone-carbone et plus précisément des matériaux de friction multicouches entièrement en composite carbone-carbone et présentant une texture différentielle, ainsi qu'un procédé de fabrication d'éléments de friction multicouches et un dispositif pour mettre en oeuvre ce procédé.

### RAPPEL DE L'ART ANTERIEUR

Les matériaux composites carbone-carbone, qui seront désignés par la suite de manière abrégée sous l'appellation "composites C-C", ont été reconnus depuis de nombreuses années comme des matériaux de friction particulièrement intéressants notamment dans les freins à haute performance, c'est à dire plus spécialement quand est recherchée une grande puissance de freinage par kilogramme de matériau de friction, dans le domaine des freins pour l'aéronautique en particulier. D'une manière générale, les composites C-C sont constitués, comme cela est connu, d'un substrat fibreux à base de fibres de carbone et d'une matrice carbonée. Cette dernière peut être obtenue soit par une ou plusieurs imprégnations du substrat fibreux avec une résine ou un brai suivies de carbonisation, soit par dépôt chimique en phase vapeur de carbone pyrolytique, soit en associant les deux procédés.
En outre, ces composites peuvent subir un traitement thermique à très haute température, dit de graphitisation, typiquement au-dessus de 2300°C.

On connaît déjà des disques de freins présentant un empilement de couches de matériaux carbonés. Ainsi, de nombreux brevets, tels le FR 2 313 601, le FR 2 260 726 et l'US 3 936 552 décrivent des disques de freins présentant généralement une couche centrale, ou âme, en carbone ou graphite brut sur laquelle sont fixées des couches de friction en composite C-C offrant une meilleure résistance à l'usure que la couche centrale en carbone ou en graphite brut. Une des motivations invoquées pour justifier ce type d'empilement est le coût du carbone ou du graphite brut, inférieur à celui d'un matériau composite C-C.

On connaît aussi grâce au FR 2 225 654 des disques de freins résultant de l'assemblage de plusieurs couches de composites C-C par des adhésifs ou par des moyens mécaniques de manière à avoir une couche centrale, réutilisable, recouverte d'une couche d'usure, la couche centrale assurant la tenue mécanique et la couche d'usure constituant une plaque d'usure remplaçable.

Cependant, si le FR 2 225 654 décrit bien le concept général et l'intérêt d'un frein multicouche en composite C-C avec une couche assurant la tenue mécanique et une ou plusieurs couches assurant la fonction frottement, ce brevet ne dit pas comment obtenir un frein multicouches à hautes performances techniques, ni comment l'obtenir de manière économique.

### OBJET DE L'INVENTION

L'objet de l'invention est un élément de friction multicouches en composite C-C, comprenant une couche de structure et au moins une couche de friction, à haute performance technique et présentant des caractéristiques adaptées aux fonctions de chaque couche, une tenue mécanique élevée et notamment une résilience élevée pour la couche de structure, des propriétés tribologiques avantageuses et notamment un taux d'usure peu élevé pour la/les couche(s) de friction.
L'invention a aussi pour objet un procédé de fabrication économique de matériaux de friction multicouches ainsi qu'un dispositif pour mettre en oeuvre le procédé.

### DESCRIPTION DE L'INVENTION

Le premier objet de l'invention est un élément de friction multicouches comportant une couche de structure (1) en matériau composite carbone-carbone dont au moins une face est recouverte d'une couche de friction (2) en matériau composite carbone-carbone solidaire de ladite couche de structure (1) caractérisé en ce que, d'une part, la couche de structure (1) est obtenue à partir d'un substrat fibreux à texture dite "grossière" (5g) présentant un diamètre de pores médian supérieur à 100 »m et constitué de mèches de fibre de carbone ou de précurseur de fibre de carbone et en ce que, d'autre part, la couche de friction (2) est obtenue à partir d'un substrat fibreux (5f) à texture dite "fine" présentant un diamètre de pores médian inférieur à 50 »m et constitué de segments de fibres (6) de carbone ou de précurseur de carbone distribués aléatoirement.

Le substrat fibreux (5g) représente de 10 à 50 % en volume du composite C-C constituant la couche de structure (1), alors que le substrat fibreux (5f) représente de 3 à 25 % en volume du composite C-C constituant la couche de friction (2).

En effet, en vue d'améliorer les performances des éléments de friction en matériau multicouches, la demanderesse a étudié l'influence de la texture des matériaux composite C-C, et en particulier l'influence du substrat fibreux sur les propriétés tant mécaniques que tribologiques. Elle a eu la surprise de faire les constatations suivantes :
- en ce qui concerne la résilience et donc l'aptitude à résister au choc, un substrat à texture grossière (5g) permet d'obtenir des composites présentant une résilience de l'ordre de 40 à 50 kJ/m², alors qu'un substrat à texture fine (5f) conduit à un composite à faible résilience, de l'ordre de 3 à 5 kJ/m², toutes choses égales par ailleurs.
- certaines caractéristiques mécaniques, telles que le module et la résistance à la rupture, ne varient pas sensiblement avec la texture du substrat fibreux, contrairement à d'autres, telles la résistance à la flexion qui varie de 150 à 200 MPa pour un composite à texture grossière et de 40 à 120 MPa pour un matériau à texture fine.
- en ce qui concerne la résistance à l'usure, il a été constaté qu'un substrat fibreux à texture fine permettait d'obtenir un matériau composite ayant un taux d'usure qui pouvait être jusqu'à 6 fois moins important que celui d'un matériau composite à substrat fibreux à texture grossière.

Les études réalisées par la demanderesse ont montré le rôle capital joué par le substrat fibreux et ont permis de trouver un critère de texture du substrat fibreux permettant, soit de renforcer les caractéristiques mécaniques de la couche de structure en utilisant un substrat fibreux à texture grossière, soit de renforcer les propriétés tribologiques de la couche de friction en utilisant un substrat fibreux à texture fine à segments de fibres orientées aléatoirement, de sorte que, en associant des couches de texture différente, il est possible d'obtenir des éléments de freins multicouches optimisés vis à vis des contraintes tant mécaniques que tribologiques.

Par diamètre de pores médian supérieur à 100 »m on signifie qu' au moins 50 % du volume de pores est constitué de pores ayant un diamètre supérieur à 100 »m. Et, de même, par diamètre de pores médian inférieur à 50 »m, on signifie qu'au moins 50 % du volume de pores est constitué de pores ayant un diamètre inférieur à 50 »m.
Pour des raisons pratiques, on mesure le diamètre de pores non pas sur le substrat fibreux tel que fabriqué selon l'invention, mais sur ce substrat fibreux après début de densification par dépôt de carbone, de manière à pouvoir manipuler le substrat fibreux sans l'altérer et avoir ainsi des mesures significatives et comparatives. A titre indicatif, un substrat fibreux obtenu selon l'invention et de densité apparente de 0,6 devient manipulable en vue d'une mesure de diamètre de pores lorsque sa densité passe, par dépôt de carbone, à 0,9 environ, sachant que la densité apparente finale est de l'ordre de 1,8 en fin de densification.

Il convient de noter que finesse des pores et porosité totale (ou volume de pores) sont deux grandeurs différentes qui peuvent varier indépendamment l'une de l'autre. Ainsi, lors des essais réalisés par la demanderesse, il a été observé que le substrat à texture grossière (5g) avait une porosité totale inférieure à celle du substrat à texture fine ((f). Par exemple, comme indiqué à l'exemple 1, le substrat à texture grossière (5g) a une porosité de 30% (pourcentage du volume total), alors que celle du substrat fibreux à texture fine (5f) a une porosité totale de 42%, déterminée également après début de densification.

Selon une première modalité de l'invention, le substrat fibreux est entièrement constitué de segments orientés aléatoirement :
- segments de fibres (6) de carbone ou de précurseur de carbone formant le substrat fibreux à texture dite fine (5f) de la couche de friction (2),
- segments de mèches (9) de fibre de carbone ou de précurseur de carbone formant le substrat fibreux à texture dite grossière (5g) de la couche de structure (1).

Selon l'invention, la longueur dudit segment de mèche est comprise entre 5 et 60 mm et celle dudit segment de fibre est comprise entre 0,05 et 60 mm.
le substrat fibreux de la couche de friction (5f) peut être constitué avantageusement par des fibres de carbone broyées, comprenant des segments de fibres (6) de longueur moyenne comprise entre 0,2 et 2 mm.

Les fibres de carbone ou de précurseur de carbone utilisables pour la fabrication du renfort fibreux selon l'invention se présentent, comme cela est connu, sous la forme de mèches de grande longueur constituées d'un grand nombre de fibres parallèles, typiquement de 1000 à 320000 fibres élémentaires de carbone ou de précurseur de carbone, chaque fibre ayant un diamètre généralement compris entre 5 et 12 »m.

Selon l'invention, le substrat fibreux d'une couche de structure (1) est constitué de mèches de fibres de carbone ou de précurseur de carbone. Par mèche, on entend un grand nombre de fibres élémentaires qui est peu ou prou celui de la mèche de départ, généralement supérieur à 1000 et pouvant atteindre 320000.
Par segment de mèche (9), on entend une portion de mèche comprenant un grand nombre de fibres élémentaires sensiblement parallèles et de longueur comme défini précédemment.

Par contre, le substrat fibreux d'une couche de friction est constitué de segments de fibre (6), chaque segment de fibre étant de longueur comme défini précédemment et correspondant idéalement à une seule fibre et en pratique à un petit nombre de fibres assemblées, nombre typiquement inférieur à 100.

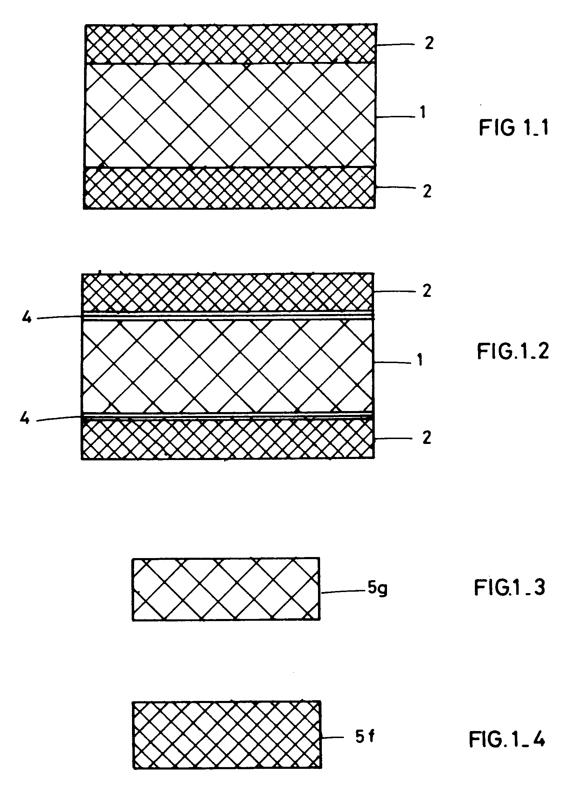

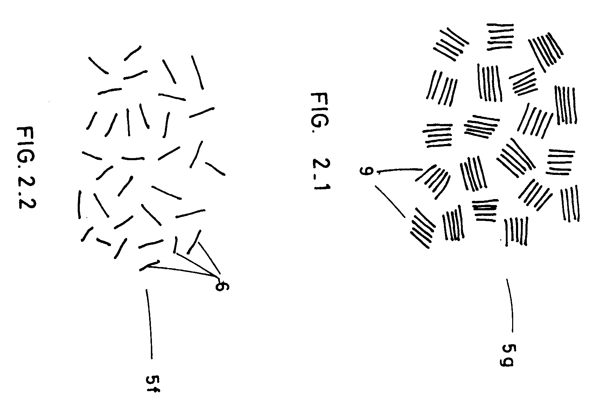

Ainsi, dans le cas d'une couche de friction (2), le substrat fibreux (5f), à base de segments de fibres (6), peut être schématisé par la figure 1-4 et la figure 2-2 où chaque trait représente une fibre élémentaire ou un petit nombre de fibres (inférieur à 100), alors que la figure 1-3 et la figure 2-1 représentent, dans le cas d'une couche de structure (1), un substrat fibreux (5g) à base de segments de mèches (9), c'est à dire à base de "paquets" constitués d'un grand nombre de segments de fibres élémentaires sensiblement parallèles.

Un substrat fibreux constitué seulement de segments de mèches ou de fibres forme un enchevêtrement ininterrompu de segments de mèches/de fibres et permet d'obtenir un élément de friction multicouches d'une seule pièce, sans discontinuité du substrat fibreux entre la partie contenant un substrat fibreux à texture grossière (5g) et la partie contenant un substrat fibreux à texture fine (5f), et sans discontinuité non plus de la matrice carbonée. Dans ce cas, le substrat fibreux est ininterrompu entre la couche de friction (2) et la couche de structure (1) et varie continuement en texture par mélange et interpénétration de segments à texture fine et à texture grossière à l'interface des deux couches, ce qui assure la cohésion maximale entre une couche de friction et une couche de structure.
Il n'y a donc pas dans ce cas de couche de liaison spécifique, par exemple une couche d'adhésif, entre une couche de structure et une couche de friction, mais seulement, à l'interface, un enchevêtrement ininterrompu de segments de mèches et de libres sur une épaisseur plus ou moins grande. De même, la matrice carbonée est continue sur l'ensemble de l'élément de friction puisque résultant d'une densification globale sur l'ensemble du substrat fibreux, ce qui contribue fortement à la cohésion des diverses couches.

Selon une autre modalité de l'invention, le substrat fibreux de l'élément de friction en composite C-C peut comprendre aussi un matériau carboné sous forme de nappe :
- qui sera, dans le cas de la couche de structure, un substrat fibreux orienté (13), typiquement à base de tissus, ou de produits tissés en 3 dimensions obtenus à partir de mèches de fibres de carbone ou de précurseur de carbone, permettant d'obtenir, éventuellement après compression, un diamètre de pores médian supérieur à 100 »m.
- qui sera, dans le cas de la couche de friction, un mat ou un feutre de carbone ou de précurseur de carbone constitué par un enchevêtrement de libres idéalement élémentaires et permettant d'obtenir, éventuellement après compression, un diamètre de pores médian inférieur à 50 »m.

Enfin, selon un autre objet de l'invention, l'élément de friction peut être obtenu à partir d'un substrat fibreux "mixte" constitué :
- soit par un substrat fibreux constitué d'un empilement de tissus de carbone ou précurseur de carbone pour la couche de structure (1) et par un substrat fibreux constitué de segments de fibres selon l'invention, et de préférence de fibres broyées pour la couche de friction (2),
- soit par un substrat fibreux constitué de segments de mèches pour la couche de structure (1) et par un substrat fibreux constitué par un mat ou un feutre pour la couche de friction (2).

D'une manière générale, l'invention concerne un élément de frein dont le substrat fibreux présente une texture différentielle qui peut être adaptée à tout problème particulier. Cette texture différentielle repose essentiellement sur la présence soit de mèches dans la couche de structure (1), soit de fibres, idéalement élémentaires, dans la couche de friction (2), et dépend donc du nombre de fibres élémentaires agglomérées localement, un tissu étant considéré comme constitué de mèches, et un feutre ou un mat comme constitué de fibres. Ce nombre est typiquement au moins 10 fois plus grand dans le cas d'une mèche (>1000) que dans le cas d'une fibre (<100) selon l'invention.

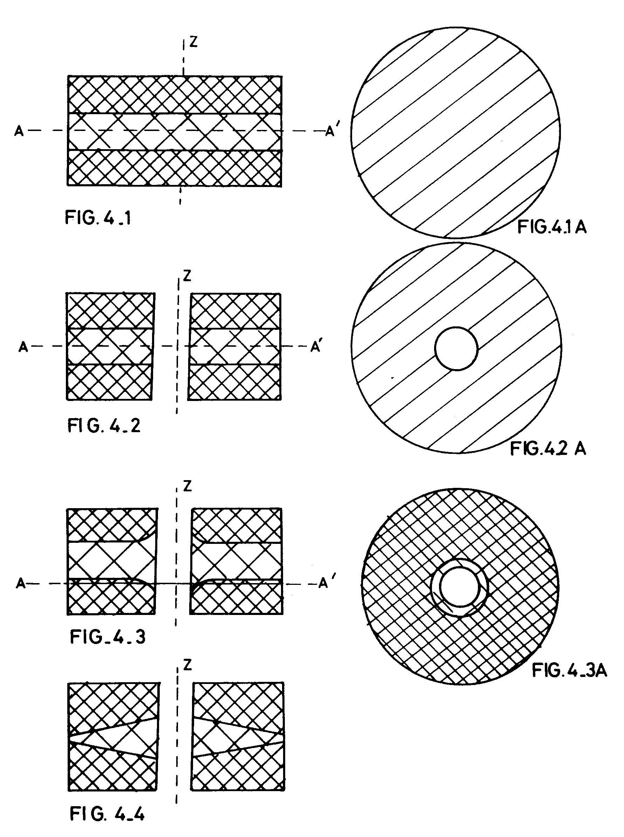

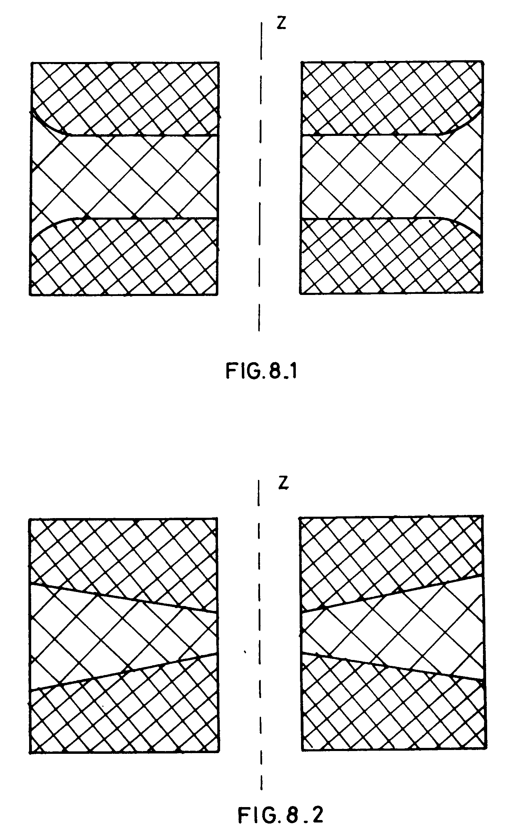

Cette texture variera généralement selon un axe Z perpendiculaire aux différentes couches comme indiqué précédemment. Cependant, il peut y avoir des cas où la texture différentielle pourra varier dans le plan d'une couche, radialement, par exemple pour renforcer la partie centrale d'un disque de frein, comme illustré aux figures 4-3 et 4-4 ou pour renforcer la partie externe, comme illustré aux figures 8-1 et 8-2.

Selon l'invention, l'expression "texture différentielle" recouvre donc différents cas de figure. Quelques cas ont été représentés sur les planches 4, 5, et 8 pour illustrer le concept de texture différentielle.

Que le substrat fibreux (5g) à texture grossière soit constitué de mèches (tissus) ou de segments de mèches, sa densité apparente avant densification est comprise entre 0,3 et 0,7, alors que celle du substrat fibreux à texture fine est comprise entre 0,05 et 0,3. La densité apparente globale du substrat fibreux (5g) et (5f) est comprise entre 0,1 et 0,7.

Selon l'invention, la matrice carbonée du composite C-C multicouches, qu'il s'agisse d'une couche de structure ou de friction, n'est pas spécifique à l'invention et résulte, de manière connue, de la densification du substrat fibreux comprimé, soit par dépôt chimique de carbone pyrolytique en phase vapeur, soit par un ou plusieurs traitements d'imprégnation par une résine ou un brai conduisant à un taux de carbone élevé après carbonisation, traitements suivis d'une carbonisation, soit de l'association des deux procédés. Après densification, l'élément de friction selon l'invention est un matériau composite C-C de densité comprise entre 1,55 et 1,8, qui peut éventuellement être soumis à un traitement ultérieur de graphitisation.

L'invention concerne également des éléments de frictions constitués par un assemblage de couches de structure (1) en composite C-C et de couches de friction (2) en composite C-C, obtenues respectivement par densification de substrat fibreux à texture grossière (5g) et de substrat fibreux à texture fine (5f), l'assemblage pouvant être réalisé par tout moyen connu, notamment par une couche de liaison (4).
De préférence, on utilise comme couche de liaison (4) une résine conduisant par chauffage à la formation d'une couche carbonée, généralement poreuse. L'élément de friction obtenu par assemblage peut avoir une matrice carbonée continue sur l'ensemble de l'élément de friction car il est avantageux d'assembler des couches de structure et de friction ayant une porosité résiduelle et de terminer la fabrication de l'élément de friction par un dépôt de carbone de manière à densifier l'ensemble des couches ainsi que la couche de liaison (4).

L'invention permet d'obtenir des éléments de friction qui se présentent généralement sous forme de disques de diamètre pouvant atteindre, voire dépasser, 600 mm (diamètre extérieur) et typiquement pouvant avoir une couche centrale de structure d'épaisseur de l'ordre de 10 - 20 mm, recouverte de deux couches de friction d'épaisseur de l'ordre de 3 - 7 mm.

Comme déjà mentionné, l'invention permet d'obtenir, grâce à la texture différentielle des couches de structure et de friction en composite C-C, des performances spécifiques élevées, c'est à dire considérées par kilogramme d'élément de friction, tant en ce qui concerne les propriétés mécaniques, la résilience notamment, que les propriétés tribologiques, la résistance à l'usure principalement.
Comme cela est connu, il est donc possible de rénover un élément de friction en remplaçant la couche de friction usée par une couche neuve obtenue selon l'invention.

En outre, l'élément de friction selon l'invention présente, en particulier dans le cas d'un substrat fibreux constitué de segments de mèches ou de fibres, l'avantage de ne pas comporter d'absence locale de substrat à l'échelle des dimensions du substrat local, c'est à dire au sein d'un volume maximum d'environ 0,05 mm³ pour un substrat fibreux à texture fine et d'environ 5 mm³ pour un substrat à texture grossière.

Le deuxième objet de l'invention est un procédé de fabrication économique de ces éléments de friction en composite C-C.

Selon une première modalité, le procédé de fabrication d'un élément de friction en composite carbone-carbone multicouches constitué d'une couche de structure (1) et d'au moins une couche de friction (2), comporte une étape de fabrication d'un substrat fibreux à forme géométrique souhaitée, une étape éventuelle de carbonisation si ledit substrat fibreux est à base de précurseur de fibre de carbone, et une étape de densification dudit substrat fibreux par dépôt de carbone pour former la matrice carbonée, ladite étape de fabrication du substrat fibreux à forme géométrique souhaitée est caractérisée en ce qu'on fabrique tout ou partie dudit substrat fibreux en introduisant dans un moule (10), à l'aide éventuellement d'un dispositif de distribution, des segments de mèches en fibre de carbone ou de précurseur de carbone de longeur comprise entre 5 et 60 mm pour constituer le substrat fibreux (5g) de la couche de structure (1), des segments de fibres de carbone ou de précurseur de carbone de longueur comprise entre 0,05 et 60 mm pour constituer le substrat fibreux (5f) de la couche de friction (2), et en comprimant les segments de mèches et de fibres, de manière à obtenir un substrat fibreux (5f, 5g) de densité apparente globale comprise entre 0,1 et 0,7 et constitué de segments de mèches et/ou de fibres enchevêtrés et orientés aléatoirement.

Le substrat fibreux comprimé a la forme générale du moule, qui sera donc cylindrique si l'élément de friction doit avoir la forme d'un disque, ce qui est le cas généralement. Cependant, le procédé permet de fabriquer des substrats fibreux à section de forme géométrique quelconque.

Selon une variante de cette première modalité, on forme seulement une partie du substrat fibreux à partir de segments de mèches et/ou de fibres et on complète sa préparation par adjonction d'éléments découpés à partir de nappes en carbone ou précurseur de carbone, nappes constituées de tissus ou de feutre/mat selon que l'on souhaite un substrat fibreux à texture grossière ou fine. Ces différentes parties de substrat peuvent être assemblées à l'aide d'adhésifs ou par compression. Une fois formé, le substrat fibreux global est soumis à un traitement de densification par dépôt de carbone.

Selon une deuxième modalité, le procédé de fabrication d'un élément de friction en composite carbone-carbone multicouches constitué d'une couche de structure et d'au moins une couche de friction, comporte la fabrication d'une couche de structure (1) en composite carbone-carbone et d'au moins une couche de friction (2) en composite carbone-carbone, leur assemblage par tout moyen connu, tel une couche de liaison (4), caractérisé en ce qu'on fabrique la couche de structure par dépôt de carbone sur un substrat fibreux (5g) à texture grossière ayant un diamètre de pores médian supérieur à 100 »m et on fabrique la couche de friction par dépôt de carbone sur un substrat fibreux (5f) à texture fine ayant un diamètre de pores médian inférieur à 50 »m, les substrats fibreux étant au préalable carbonisés dans le cas d'un substrat fibreux en précurseur de fibre de carbone.
Le substrat fibreux (5g) à texture grossière est obtenu à partir d'une nappe, d'un tissu en fibre de carbone ou de précurseur de carbone, ou à partir de segments de mèches de fibres de carbone ou de précurseur de carbone, de longueur comprise entre 5 et 60 mm, placés dans un moule éventuellement à l'aide d'un dispositif de distribution puis comprimés jusqu'à obtenir une densité apparente comprise entre 0,3 et 0,7.
Le substrat fibreux (5f) à texture fine est obtenu à partir d'un mat, d'un feutre en fibre de carbone ou de précurseur de carbone, ou à partir de segments de fibres de carbone ou de précurseur de carbone, de longueur comprise entre 0,05 et 60 mm, placés dans un moule (10), éventuellement à l'aide d'un dispositif de distribution, puis éventuellement comprimés jusqu'à obtenir une densité apparente comprise entre 0,05 et 0,3.

Cette deuxième modalité peut donc être avantageusement utilisée pour la rénovation d'éléments de friction usés ne comportant plus en pratique qu'une couche de structure (1) en composite C-C. Mais il est également possible de rénover un élément de friction usé en soumettant à une densification par dépôt de carbone une couche de structure (1) en composite C-C revêtue d'au moins une couche de substrat fibreux (5f) à texture fine, cette modalité constituant en quelque sorte un panachage des deux modalités précédentes.

Pour mettre en oeuvre l'invention dans le cas où le substrat fibreux comprend des segments de mèche ou de fibres, la demanderesse a mis au point un dispositif de distribution des segments de mèches et/ou de fibres très performant pour la mise en oeuvre du procédé, assurant le remplissage automatique du moule.

Selon l'invention, le dispositif de distribution de segments de mèches ou de fibres comporte au moins une tête de distribution (8) de segments de mèches et/ou de fibres, en mouvement relatif par rapport au moule (10) et balayant l'ensemble de la surface horizontale du moule, de manière à remplir progressivement et régulièrement, par couches successives, le moule de segments orientés aléatoirement de mèches (9) et/ou de fibres (6) de carbone tout en maintenant un plan de distribution (7) sensiblement horizontal, la proportion de segments de mèches et/ou de fibres de carbone distribués par la(es)dite(s) tête(s) étant de préférence asservie aux coordonnées (z, ρ, ϑ) de la portion de plan de distribution recevant les segments de mèche et/ou de fibres de carbone, de manière à avoir localement dans le moule, et de manière prédéterminée, un substrat fibreux de la texture souhaitée pouvant aller, après compression éventuelle, d'une texture fine à diamètre de pores médian inférieur à 50 »m, à une texture grossière à diamètre de pores médian supérieur à 100 »m.

Ce dispositif de distribution comporte une ou plusieurs têtes de distribution (8), éventuellement accolées, munies de moyens d'alimentation continue ou pas à pas en mèche(s) de fibres de carbone de grande longueur, éventvellement ensimée ou préimprégnée, de moyens pour couper la/les mèches en segments (6,9) de longueur prédéterminée, de moyens éventuels pour faciliter la dispersion des segments obtenus à partir de mèche éventuellement ensimée ou préimprégnée de manière à obtenir des segments de fibres (6), de moyens soit de déplacement de la(des) tête(s) elle(s)-même(s) soit de transport des segments obtenus à partir des mèches continues de manière à ce que le remplissage du moule se fasse par couches successives sensiblement horizontales (7) et que les segments (6,9) soient placés en un point précis du moule défini par ses coordonnées (z, ρ, ϑ), enfin de moyens informatiques pour asservir la proportion de segments de fibres/de mèches (définie par le pourcentage volumique d'une des deux sortes de segments) à la position des segments dans le moule de manière à avoir localement dans l'élément de friction la texture souhaitée selon un programme de remplissage préétabli.

Le dispositif peut avoir deux têtes de distribution, une, alimentée en mèche de fibres de carbone ensimée ou préimprégnée, fournissant des segments de mèches (9), l'autre, alimentée en mèche de fibres de carbone ni ensimée ni préimprégnée, fournissant des segments de fibres (6).
Cette dernière tête peut, selon une variante, être alimentée en fibres broyées de carbone ou de précurseur de carbone, fournissant des segments de fibres (6).

Selon une modalité du dispositif, il peut avoir une seule tête de distribution, alimentée en mèche de fibres de carbone ensimée ou préimprégnée, fournissant en un endroit donné du moule et en fonction du programme de remplissage, des segments de mèche (9) de longueur au moins égale à 5 mm et/ou des segments de fibres (6) de longueur inférieure à 5 mm.
Dans ce cas, la tête est munie d'un moyen pour couper les mèches à longueur prédéterminée et munie d'un moyen de dispersion des segments de mèche, activable lorsque des segments de fibres (6) doivent être déposés dans le moule.

Pour obtenir les segments de mèches (9) selon l'invention, il importe que les mèches de fibres de carbone (ou de précurseur) restent sous forme de mèche et n'aient pas tendance à se disperser en fibres isolées. Pour cela, on coupe des mèches de fibres de carbone (ou précurseur) de préférence ensimées ou préimprégnées de résine.

Pour obtenir les segments de fibres (6) selon l'invention, il importe au contraire que les segments de fibres soient constitués de fibres isolées, ou, à défaut, d'un petit nombre de fibres associées. Pour cela, on coupe ou on broie des mèches de fibres de carbone (ou précurseur de carbone) de préférence ni ensimées, ni préimprégnées.
Cependant, des essais ont montré que des segments de fibres (6) pouvaient aussi être obtenus à partir de segments de mèches ensimées ou préimprégnées de courte longueur, moyennant des moyens de dispersion suffisants pour disperser ces segments de mèches en segments de fibres.
Il peut être avantageux d'alimenter la tête destinée à délivrer des segments de fibres (6) non pas en mèche de grande longueur mais directement en segments de fibres.
En effet, des segments de fibres de courte longueur moyenne, typiquement inférieure à 1 mm, peuvent être obtenus par broyage de chutes ou résidus divers de fibres, ce qui constitue une source d'approvisionnement particulièrement économique.
La fibre de carbone broyée se présente sous forme d'une poudre que l'on peut véhiculer et déplacer soit par gravité, soit par entraînement pneumatique, soit enfin sous forme d'une dispersion dans un liquide. Dans ce cas, afin que soit évacué, de préférence par le fond du moule, le gaz ou le liquide support de la poudre, le fond du moule sera percé de trous et éventuellement muni de moyens permettant l'aspiration du gaz ou du liquide à travers le fond du moule.

Des essais préliminaires ont permis d'établir, en fonction des divers paramètres et notamment de la longueur des segments de mèches ou de fibres, la correspondance entre la hauteur (z) d'une portion de substrat fibreux dans le moule et la hauteur de la même portion dans le substrat fibreux comprimé, c'est à dire en fait dans l'élément de friction lui-même puisque le substrat fibreux comprimé subit peu de changements dimensionnels lors du traitement ultérieur de densification.

### AVANTAGES

Outre les avantages techniques déjà considérés de l'élément de friction, le procédé et dispositif selon l'invention présentent eux aussi de nombreux avantages.

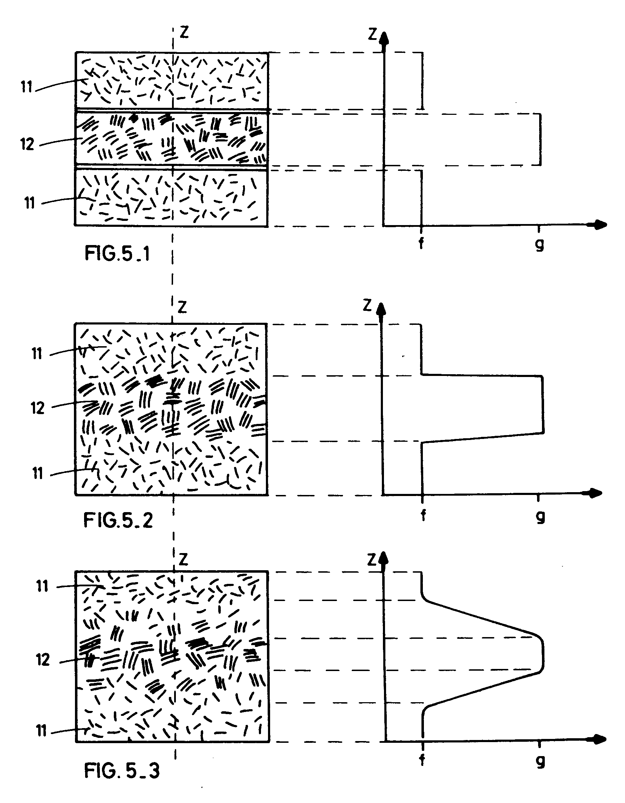

Le dispositif selon l'invention permet de réaliser de manière reproductible et automatique n'importe quel profil de substrat fibreux à texture variable par "commbinaison linéaire" de deux matériaux, l'un à texture fine, l'autre à texture grossière.
L'invention permet d'obtenir un substrat fibreux tridimensionnel à segments de mèches et/ou de fibres enchevêtrés dont la texture est prédéterminée en fonction des coordonnées (z, ρ, ϑ) de tout point ou portion de volume dans l'espace occupé par le substrat fibreux constituant le renfort de l'élément de friction.
Ce procédé se prête donc à une automatisation complète, ce qui permet aussi de changer de fabrication, éventuellement par simple modification du programme de remplissage du moule.
Les planches 4, 5, et 8 illustrent quelques-unes de ces possibilités, notamment le cas simple où le substrat fibreux est constitué de couches à texture homogène par plan (fig. 4-1, 4-2, 5-2).

L'invention constitue donc un moyen de fabriquer de manière reproductible et automatique des éléments de friction présentant un substrat fibreux à texture quelconque prédéterminée, de sorte qu'il est possible d'obtenir à la fois des éléments de friction "sur mesure", à des prix compétitifs et respectant les exigences de l'assurance qualité.
En effet, ces éléments de friction doivent, dans de nombreux cas, satisfaire à un niveau élevé d'assurance qualité, difficilement compatible avec des procédés de fabrication peu ou pas automatisés, sachant que dans la fabrication d'un matériau composite, la matrice continue pose moins de problèmes de qualité que le substrat dicontinu.
Les prix compétitifs résultent de plusieurs éléments : économie de matière puisqu'un élément de friction peut être directement obtenu à la forme désirée, possibilité d'utiliser des mèches de carbone moins coûteuses que les tissus ou des fibres broyées de carbone, à leur tour moins coûteuses que les mèches de carbone, enfin économie du procédé lié à son automatisation.

### DESCRIPTION DES FIGURES

La figure 1-1 schématise en coupe transversale un élément de friction multicouches comportant une couche de structure (1) et, de part et d'autre de celle-ci, deux couches de friction (2).

La figure 1-2 est analogue à la figure 1-1 mais comporte en plus deux couches de liaison (4) pour rendre solidaires la couche de structure (1) et les deux couches de friction (2).

La figure 1-3 schématise la texture grossière 5g et la figure 1-4 schématise la texture fine 5f, représentations utilisées sur les figures 1-1, 1-2, 4-1 à 4-4.

La figure 2-1 schématise une texture grossière 5g constituée de segments de mèches (9).

La figure 2-2 schématise une texture fine 5f constituée de segments de fibres de carbone (fibres unitaires ou petit nombre de fibres unitaires associées) (6).

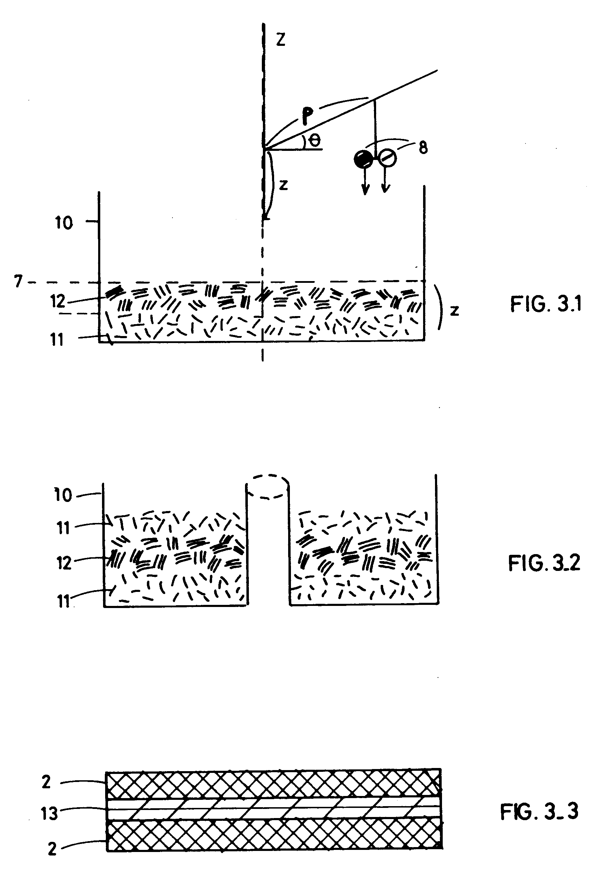

La figure 3-1 représente en coupe verticale, un moule (10) en cours de remplissage à l'aide de deux têtes de distribution (8) associées, une de segments de fibres et une de segments de mèches. Des moyens informatiques (non représentés sur la figure), avec un programme de remplissage du moule, assurent le déplacement des têtes, dont la position est définie par ses coordonnées (z, ρ, ϑ), et la distribution de mèches produisant localement la texture voulue, prévue par le programme (fine/grossière / ou intermédiaire par mélange des deux textures), de manière à assurer le remplissage du moule par couches successives (11, 12).

La figure 3-2 est analogue à la figure 3-1, mais le moule présente un orifice central.

La figure 3-3 schématise le cas où la couche de structure (1) est constituée par un empilement de substrat fibreux orienté (13) qui est introduit dans le moule au cours du remplissage.

Les figures 4-1 à 4-4 représentent des coupes selon l'axe Z de différents éléments de friction de géométrie et de texture variable. Les figures 4-1A à 4-3A représentent la texture du substrat fibreux dans le plan AA' perpendiculaire à l'axe Z.

Les figures 5-1 à 5-3 comportent pour chacune d'entre elles la schématisation de la texture du substrat fibreux en coupe ainsi qu'un diagramme portant en abscisse la texture qui va de "f" à "g", "f" représentant la texture fine et "g" la texture grossière, et en ordonnée Z la distance z d'une couche depuis la partie inférieure du substrat fibreux prise comme origine. La figure 5-1 présente une discontinuité du substrat fibreux. Les figures 5-2 et 5-3 présentent une continuité du substrat fibreux, avec pour la figure 5-2 une zone de mélange des segments de mèches et de fibres, de faible épaisseur, alors que dans la figure 5-3, le passage de la couche de segments de mèches seuls (12) aux couches de segments de fibres seuls (11) se fait progressivement sur une épaisseur relativement grande.

La figure 6 représente un dispositif simplifié qui a été utilisé pour réaliser les exemples 1 à 3. Un moule (10) à orifice central est installé sur un tambour tournant (14). Une tête de distribution (8) découpe et répartit des segments (9, 6) soit de mèches soit de fibres selon la nature de la bobine (15) de fibre de carbone (respectivement ensimée ou non).

La figure 7-1 représente la distribution de la porosité par classe de pores pour le substrat fibreux comprimé à texture grossière de l'exemple 1. La figure 7-2 représente la même distribution mais pour le substrat comprimé à texture fine. En abscisse, figure le diamètre des pores en »m, avec les intervalles de chaque classe de pores (échelle non-linéaire). En ordonnée, figure le pourcentage du volume de pores par classe de pores, rapporté au volume total de l'échantillon.

Les figures 8-1 et 8-2 représentent en coupes selon l'axe Z d'autres exemples d'éléments de friction, avec renforcement périphérique de la couche de structure, contrairement aux figures 4-3 et 4-4 qui ont un renforcement axial.

### EXEMPLES

Les exemples qui suivent, ainsi que les figures, illustrent quelques possibilités de l'invention :

### Exemple 1

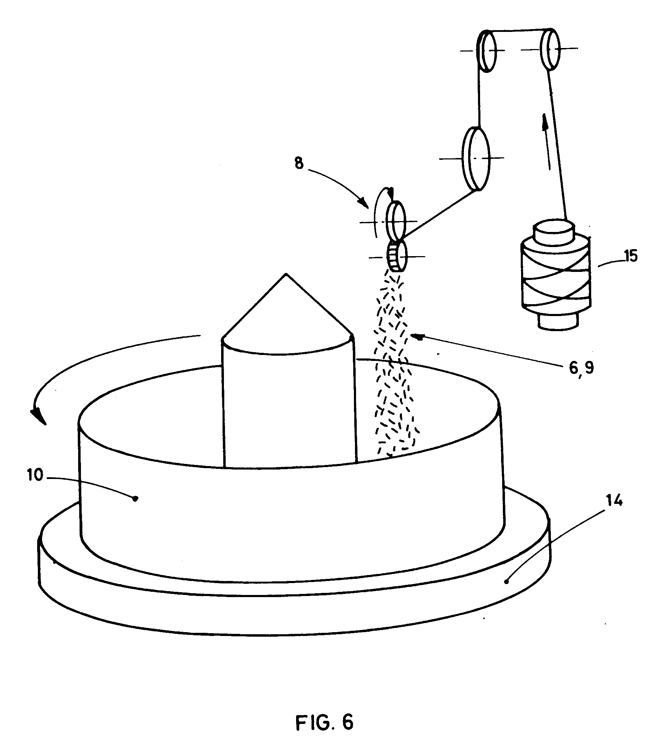

### 1- Fabrication d'un substrat fibreux à l'aide du dispositif de la figure 6.

Dans un moule cylindrique (10) de 800 mm de diamètre et de 200 mm de hauteur avec un orifice central de 180 mm de diamètre, on a formé une première couche, à texture fine, sur une épaisseur de 60 mm, constituée de segments de fibres. Ces segments de fibres ont été obtenus à partir d'une mèche de fibre de carbone de grande longueur, à 12000 fibres élémentaires, en la coupant en segments de 1 mm de longueur. Cette mèche n'étant ni ensimée, ni préimprégnée, les segments de mèches sont dispersables en segments de fibres élémentaires orientés aléatoirement dans le moule.
On a formé une seconde couche, à texture grossière, sur une épaisseur de 80 mm, constituée de segments de mèches. Ces segments ont été obtenus à partir d'une mèche ensimée de fibres de carbone de grande longueur, a 12000 fibres élémentaires en la coupant en segments de 20 mm. On a observé que les segments de mèches n'avaient pas tendance à se dissocier.
On a enfin formé une troisième couche identique à la première. La hauteur totale est d'environ 200 mm.

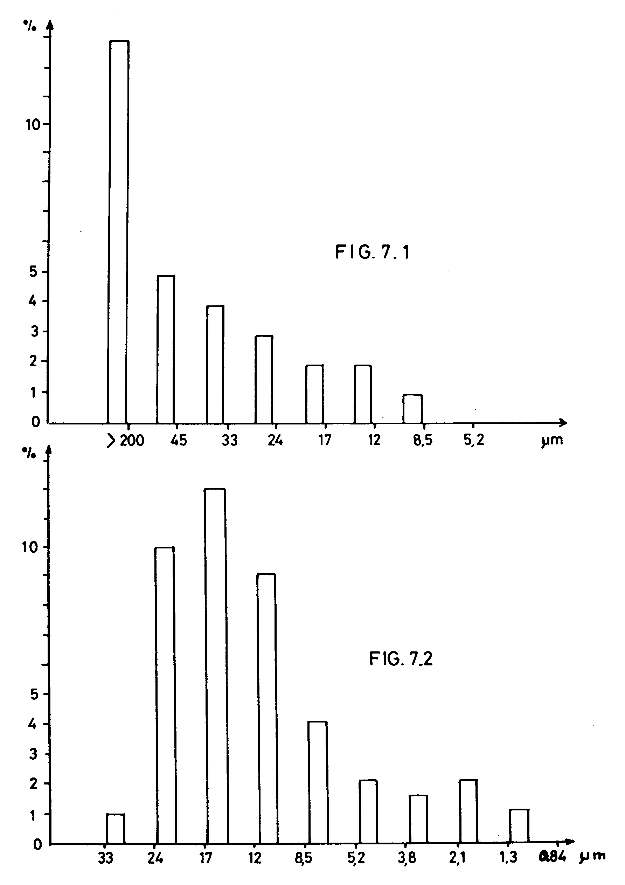

On a comprimé dans le moule le substrat fibreux ainsi obtenu. Sa hauteur après compression est de 26 mm. Il est constitué de 3 couches. On a caractérisé chaque type de couche, celle à texture grossière et celle à texture fine après début de densification par dépôt de carbone jusqu'à une densité apparente d'environ 0,9 :
La couche à texture grossière présente une porosité (volume de pores) de 30 %. La distribution du diamètre de ses pores est celle de la figure 7-1. Par simple calcul d'interpolation, on établit que le diamètre de pores médian est voisin de 140 »m.
La couche à texture fine présente une porosité de 42 %. La distribution du diamètre de ses pores est celle de la figure 7-2. Son diamètre de pores moyen est voisin de 13 »m.

### 2- Densification du substrat fibreux obtenu

Le substrat fibreux comprimé, qui est manipulable et qui a sensiblement les dimensions finales de l'élément de friction à obtenir, a été soumis à une étape de densification par dépôt en phase vapeur de carbone pyrolytique à une température de 1050°C.
On obtient ainsi un élément de friction en matériau composite de densité 1,75.

### Exemple 2

On a réalisé un élément de friction qui diffère par la couche de structure (1) : on a utilisé une mèche de 6000 fibres élémentaires au lieu de 12000 dans l'exemple 1. Les autres paramètres sont restés identiques.

### Exemple 3

On a utilisé comme substrat fibreux de la couche de structure (1) à texture grossière un empilement de tissus obtenus à partir de mèches de 3000 fibres élémentaires. Les autres paramètres sont restés identiques.

### Exemple 4

On a utilisé comme substrat fibreux des couches de friction à texture fine de l'exemple 1, de la poudre de fibres de carbone broyées constituée de segments de fibres de longueur moyenne de l'ordre de 200 »m.
On a utilisé un moule à fond perforé de manière à pouvoir introduire la poudre de fibres de carbone sous forme de dispersion en milieu aqueux, ce qui limite les nuisances dues aux poussières.
Après compression, on a obtenu un substrat fibreux de 27 mm d'épaisseur constitué d'une couche centrale à texture grossière de 17 mm d'épaisseur et de densité apparente de 0,5, et constituée de deux couches latérales à texture fine de chacune 5 mm d'épaisseur et de densité apparente de 0,15. Sa densité apparente globale est de 0,175.
Les autres éléments de l'essai sont ceux de l'exemple 1.

Propriétés des éléments de friction obtenus (ex. 1 à 4) :
Sur les différentes couches obtenues de type (1) (à texture grossière), et de type (2) (à texture fine), on a caractérisé les propriétés intrinsèques de chaque couche.

En particulier, on a mesuré la résilience (conditions classiques : choc d'un pendule sur une éprouvette avec énergie du choc de 7,5 J ), la résistance à la flexion et la vitesse relative d'usure sous faible ou forte énergie dissipée.

| | Resilience kJ/m² | Flexion MPa | Usure relative | |
|---|---|---|---|---|
| | | | a (*) | b (*) |
| Couche 1 - Ex. 1 | 50 | 150 | 6 | 20 |
| Couche 1 - Ex. 2 | 41 | 200 | 4 | 18 |
| Couche 1 - Ex. 3 | 40 | 220 | 4 | 24 |
| Couche 2 - Ex. 1-3 | 3,5 | 115 | 1 | 12 |
| Couche 2 - Ex. 4 | 2,5 | 45 | 0,3 | 10 |

| | | | | |
|---|---|---|---|---|
| (*) La condition "a" correspond à une mesure de vitesse d'usure à faible énergie dissipée, alors que la condition "b" correspond à une mesure avec forte énergie dissipée. | | | | |

Ces résultats comparatifs sont une illustration du grand intérêt d'une texture différentielle telle que définie dans la présente invention.
Il est important de noter en particulier la faible usure constatée dans le cas de la couche de friction (2) obtenue avec de la poudre de fibre de carbone broyée. La demanderesse ayant observé que l'orientation des segments de fibres était d'autant plus aléatoire que les segments étaient courts et que la croîssance du pyrocarbone, lors de l'opération de densification par dépôt de carbone en phase vapeur, avait lieu parallèlement à l'orientation des segments de fibres, elle a émis l'hypothèse que le taux d'usure de la couche de friction était sans doute lié à l'orientation des segments de fibres.

## Revendications

1. Elément de friction multicouches comportant une couche de structure (1) en matériau composite carbone-carbone dont au moins une face est recouverte d'une couche de friction (2) en matériau composite carbone-carbone solidaire de ladite couche de structure (1) caractérisé en ce que, d'une part, la couche de structure (1) est obtenue à partir d'un substrat fibreux (5g) à texture dite "grossière", représentant de 10 à 50% en volume de ladite couche (1), et présentant un diamètre de pores médian supérieur à 100 »m et constitué de mèches de fibre de carbone ou de précurseur de fibre de carbone et en ce que, d'autre part, la couche de friction (2) est obtenue à partir d'un substrat fibreux (5f) à texture dite "fine", représentant de 3 à 25 % en volume de ladite couche (2), et présentant un diamètre de pores médian inférieur à 50 »m et constitué de segments de fibres (6) de carbone ou de précurseur de carbone distribués aléatoirement.

2. Elément de friction selon la revendication 1 dans lequel la couche de structure (1) est obtenue à partir d'un substrat fibreux (5g) constitué de segments de mèches (9) de fibre de carbone ou de précurseur de carbone distribués aléatoirement.

3. Elément de friction selon la revendication 2 dans lequel la longueur dudit segment de mèche est comprise entre 5 et 60 mm et celle dudit segment de fibre est compris entre 0,05 et 60 mm.

4. Elément de friction selon la revendication 3 dans lequel la longueur dudit segment de fibre est compris entre 1 et 60 mm.

5. Elément de friction selon une quelconque des revendications 1 à 4 dans lequel le substrat fibreux forme un enchevêtrement ininterrompu de segments, segments de mèches (9) dans la couche de structure (1), segments de fiberes (6) dans la couche de friction (2), segments de mèches et de fibres dans des proportions quelconques dans la partie intermédiaire entre ladite couche de structure et ladite couche de friction.

6. Elément de friction selon la revendication 1 dans lequel le substrat fibreux (5g) de la couche de structure (1) comporte un substrat fibreux orienté (13), typiquement à base de tissus en fibre de carbone ou de précurseur de carbone.

7. Elément de friction selon une quelconque des revendications 1 à 4 et 6 dans lequel le substrat fibreux (5f) de la couche de friction (2) est constitué par un mat ou un feutre de fibres de carbone ou de précurseur de carbone.

8. Elément de friction selon une quelconque des revendications 1 à 7 dans lequel la couche de structure est obtenue à partir d'un substrat fibreux (5g) comprimé de densité apparente comprise entre 0,3 et 0,7.

9. Elément de friction selon une quelconque des revendications 1 à 8 dans lequel la couche de friction est obtenue à partir d'un substrat fibreux (5f) de densité apparente comprise entre 0,05 et 0,3.

10. Elément de friction selon une quelconque des revendications 1 à 4, 6 à 9 dans lequel la couche de structure (1) et la couche de friction (2) sont rendues solidaires grâce à une couche de liaison (4).

11. Elément de friction selon une quelconque des revendications 1 à 10 dans lequel le substrat fibreux (5f) de ladite couche de friction (2) comprend de la fibre de carbone broyée constituée de segments de fibres de longueur moyenne comprise entre 0,05 et 1 mm.

12. Elément de friction selon une quelconque des revendications 1 à 11 dans lequel lesdites mèches comprennent plus de 1000 fibres élémentaires et lesdits segments de fibres comprennent moins de 100 fibres élémentaires.

13. Procédé de fabrication d'un élément de friction en composite carbone-carbone multicouches constitué d'une couche de structure (1) et d'au moins une couche de friction (2), selon la revendication 1, comportant une étape de fabrication d'un substrat fibreux à forme géométrique souhaitée, une étape éventuelle de carbonisation si ledit substrat fibreux est à base de précurseur de fibre de carbone, et une étape de densification dudit substrat fibreux par dépôt de carbone pour former la matrice carbonée, ladite étape de fabrication du substrat fibreux à forme géométrique souhaitée étant caractérisée en ce qu'on fabrique tout ou partie dudit substrat fibreux en introduisant dans un moule (10), à l'aide éventuellement d'un dispositif de distribution, des segments de mèches en fibre de carbone ou de précurseur de carbone de longueur comprise entre 5 et 60 mm pour constituer le substrat fibreux (5g) de la couche de structure (1), et des segments de fibres de carbone ou de précurseur de carbone de longueur comprise entre 0,05 et 60 mm pour constituer le substrat fibreux (5f) de la couche de friction (2), puis en assemblant les éléments (1) et (2) par une couche de liaison (4) et/ou en comprimant les segments de mêches et de fibres jusqu'à obtenir une densité apparente globale comprise entre 0,1 et 0,7.

14. Procédé selon la revendication 13 dans lequel ledit substrat fibreux (5g) à texture grossière est obtenu à partir d'une nappe ou d'un tissu en fibre de carbone ou de précurseur de carbone, ou à partir de segments de mèches de fibres de carbone ou de précurseur de carbone, de longueur comprise entre 5 et 60 mm, placés dans un moule éventuellement à l'aide d'un dispositif de distribution puis comprimés jusqu'à obtenir une densité apparente comprise entre 0,3 et 0,7.

15. Procédé de fabrication selon la revendication 13 dans lequel ledit substrat fibreux (5f) à texture fine est obtenu à partir d'un mat ou d'un feutre en fibre de carbone ou de précurseur de carbone, ou à partir de segments de fibres de carbone ou de précurseur de carbone, de longueur comprise entre 0,05 et 60 mm, placés dans un moule (10) éventuellement à l'aide d'un dispositif de distribution puis éventuellement comprimés jusqu'à obtenir une densité apparente globale comprise entre 0,1 et 0,7.

16. Procédé selon la revendication 15 dans lequel ledit substrat fibreux (5f) est obtenu à partir de segments de fibres de carbone ou de précurseur de carbone, de longueur comprise entre 1 et 60 mm.

17. Procédé selon une des revendications 13 à 16, caractérisé en ce que ladite couche de liaison (4) est obtenue en comprimant les segments de mèches et de fibres, de manière à obtenir un substrat fibreux (5f, 5g) de densité apparente globale comprise entre 0,1 et 0,7 et constitué de segments de mèches et/ou de fibres enchevêtrées et orientées aléatoirement.

18. Procédé de fabrication selon une quelconque des revendications 13 à 17 dans lequel ledit dispositif de distribution de segments de mèches ou de fibres comporte au moins une tête de distribution (8) de segments de mèches et/ou de fibres, en mouvement relatif par rapport au moule (10) et balayant l'ensemble de la surface horizontale du moule, de manière à remplir progressivement et régulièrement, par couches successives, le moule de segments orientés aléatoirement de mèches (9) et/ou de fibres (6) de carbone tout en maintenant un plan de distribution (7) sensiblement horizontal, la proportion de segments de mèches et/ou de fibres de carbone distribués par la(es)dite(s) tête(s) étant de préférence asservie aux coordonnées (z, ρ, ϑ) de la portion de plan de distribution recevant les segments de mèche et/ou de fibres de carbone, de manière à avoir localement dans le moule, et de manière prédéterminée, un substrat fibreux de la texture souhaitée pouvant aller, après compression, d'une texture fine à diamètre de pores médian inférieur à 50 »m, à une texture grossière à diamètre de pores médian supérieur à 100 »m.

19. Dispositif de distribution des segments de mèches et/ou de fibres de carbone dans un moule qui comporte une ou plusieurs têtes de distribution (8), éventuellement accolées, munies de moyens d'alimentation continue ou pas à pas en mèche(s) de fibre de carbone de grande longueur, éventuellement ensimée ou préimprégnée, de moyens pour couper la/les mèches en segments (6,9) de longueur prédéterminée, de moyens éventuels pour faciliter la dispersion des segments obtenus à partir de mèche éventuellement ensimée ou préimprégnée de manière à obtenir des segments de fibres (6), de moyens soit de déplacement de la(des) tête(s) elle(s)-même(s) soit de transport des segments obtenus à partir des mèches continues de manière à ce que le remplissage du moule se fasse par couches successives sensiblement horizontales (7) et que les segments (6,9) soient placés en un point précis du moule défini par ses coordonnées (z, ρ, ϑ), enfin de moyens informatiques pour asservir la proportion de segments de fibres/de mèches (définie par le pourcentage volumique d'une des deux sortes de segments) à la position des segments dans le moule de manière à avoir localement dans l'élément de friction la texture souhaitée, suivant l'une des revendications 1 à 12, selon un programme de remplissage préétabli.

20. Dispositif selon la revendication 19 dans lequel on utilise deux têtes de distribution, une, alimentée en mèche de fibre de carbone ensimée ou préimprégnée, fournissant des segments de mèches (9), l'autre, alimentée en mèche de fibre de carbone ni ensimée ni préimprégnée, fournissant des segments de fibres (6).

21. Dispositif selon la revendication 19 dans lequel on utilise deux têtes de distribution, une, alimentée en mèche de fibre de carbone ensimée ou préimprégnée, fournissant des segments de mèches (9), l'autre, alimentée en fibre broyée de carbone ou de précurseur de carbone, fournissant des segments de fibres (6).

22. Dispositif selon la revendication 19 dans lequel on utilise une tête de distribution, alimentée en mèche de fibre de carbone ensimée ou préimprégnée, fournissant en un endroit donné du moule et en fonction du programme de remplissage, des segments de mèche( 9) de longueur au moins égale à 5 mm et/ou des segments de fibres (6) de longueur inférieure à 5 mm.

## Claims

1. A multi-layer friction element comprising a structure layer (1) of carbon-carbon composite material, at least one face of which is covered with a friction layer (2) of carbon-carbon composite material integral with said structure layer (1), characterised in that firstly the structure layer (1) is obtained from a so-called "coarsely" textured fibrous substrate (5g), representing from 10 to 50% by volume of said layer (1), and having a median pore diameter greater than 100 »m and being constituted by rovings of carbon fibre or carbon fibre precursor, and in that secondly the friction layer (2) is obtained from a so-called "finely" textured fibrous substrate (5f) representing 3 to 25% by volume of said layer (2), and having a median pore diameter of less than 50 »m and being constituted by randomly distributed segments of carbon or carbon precursor fibres (6).

2. A friction element according to Claim 1, wherein the structure layer (1) is obtained from a fibrous substrate (5g) constituted by randomly distributed roving segments (9) of carbon or carbon precursor fibre.

3. A friction element according to Claim 2, wherein the length of said roving segment is between 5 and 60 mm and that of said fibre segment is between 0.05 and 60 mm.

4. A friction element according to Claim 3, wherein the length of said fibre segment is between 1 and 60 mm.

5. A friction element according to any one of Claims 1 to 4, wherein the fibrous substrate forms an uninterrupted entanglement of segments, roving segments (9) in the structure layer (1), fibre segments (6) in the friction layer (2), segments of rovings and of fibres in any proportion in the intermediate part between said structure layer and said friction layer.

6. A friction element according to Claim 1, wherein the fibrous substrate (5g) of the structure layer (1) comprises an oriented fibrous substrate (13), typically with a base of woven materials of carbon or carbon precursor fibre.

7. A friction element according to any one of Claims 1 to 4 and 6, wherein the fibrous substrate (5f) of the friction layer (2) is constituted by a mat or a felt of carbon or carbon precursor fibres.

8. A friction element according to any one of Claims 1 to 7, wherein the structure layer is obtained from a compressed fibrous substrate (5g) with an apparent density of between 0.3 and 0.7.

9. A friction element according to any one of Claims 1 to 8, wherein the friction layer is obtained from a fibrous substrate (5f) with an apparent density of between 0.05 and 0.3.

10. A friction element according to any one of Claims 1 to 4, 6 to 9, wherein the structure layer (1) and the friction layer (2) are rendered integral by virtue of a connecting layer (4).

11. A friction element according to any one of Claims 1 to 10, wherein the fibrous substrate (5f) of said friction layer (2) comprises the crushed carbon fibre constituted by segments of fibres with a mean length of between 0.05 and 1 mm.

12. A friction element according to any one of Claims 1 to 11, wherein said rovings comprise more than 1000 elementary fibres and said fibre segments comprise less than 100 elementary fibres.

13. A process for the manufacture of a friction element of multi-layer carbon-carbon composite material constituted by a structure layer (1) and at least one friction layer (2), according to Claim 1, comprising a step for manufacturing a fibrous substrate of the desired geometric shape, a possible carbonization step if said fibrous substrate has a carbon fibre precursor base, and a densification step of said fibrous substrate by carbon deposition to shape the carbonaceous matrix, said manufacturing step of the fibrous substrate of desired geometric shape being characterised in that all or part of said fibrous substrate is manufactured by introducing into a mould (10), possibly by the use of a distribution apparatus, roving segments of carbon or carbon precursor fibre which are between 5 and 60 mm in length to constitute the fibrous substrate (5g) of the structure layer (1), and segments of carbon or carbon precursor fibres which are between 0.05 and 60 mm in length to form the fibrous substrate (5f) of the friction layer (2), then by assembling the elements (1) and (2) by a connecting layer (4), and/or by compressing the segments of rovings and of fibres until an overall apparent density of between 0.1 and 0.7 is obtained.

14. A process according to Claim 13, wherein said coarsely textured fibrous substrate (5g) is obtained from a sheet or a woven material of carbon or carbon precursor fibre, or from segments of rovings of carbon or carbon precursor fibres of between 5 and 60 mm in length which are placed in a mould, possibly by means of a distribution apparatus, and which are then compressed to obtain an apparent density of between 0.3 and 0.7.

15. A manufacturing process according to Claim 13, wherein said finely textured fibrous substrate (5f) is obtained from a mat or a felt of carbon or carbon precursor fibre, or from segments of carbon or carbon precursor fibres of between 0.05 and 60 mm in length which are placed in a mould (10), possibly by means of a distribution apparatus, and which then may be compressed in order to obtain an overall apparent density of between 0.1 and 0.7.

16. A process according to Claim 15, wherein said fibrous substrate (5f) is obtained from segments of carbon or carbon precursor fibres of between 1 and 60 mm in length.

17. A process according to one of Claims 13 to 16, characterised in that said connecting layer (4) is obtained by compressing the segments of rovings and fibres in order to obtain a fibrous substrate (5f, 5g) of an overall apparent density of between 0.1 and 0.7 and constituted by segments of rovings and/or fibres which are entangled and oriented randomly.

18. A manufacturing process according to any one of Claims 13 to 17, wherein said apparatus for distributing the segments of rovings or fibres comprises at least one head (8) for distributing the segments of rovings and/or fibres and which moves relative to the mould (10) and which sweeps the entire horizontal surface of the mould in order to gradually and evenly fill the mould with successive layers of randomly oriented segments of rovings (9) and/or fibres (6) of carbon, whilst maintaining a substantially horizontal distribution plane (7), the proportion of segments of rovings and/or of carbon fibres which are distributed by the head(s) preferably being dependent on the coordinates (z, ρ, ϑ) of the portion of the distribution plane receiving the roving segments and/or segments of carbon fibres, in such a way as to have locally in the would, in a predetermined manner, a fibrous substrate of the desired texture which may vary, after compression, from a fine texture with a median pore diameter of less than 50 »m to a coarse texture with a median pore diameter which is greater than 100 »m.

19. An apparatus for distributing segments for roving and/or carbon fibres in a would which comprises one or more distribution heads (8), possibly side by side, which are equipped with means for continuous or step-by-step supply of long carbon fibre roving(s) which may be sized or pre-impregnated, with means for cutting the roving(s) into segments (6, 9) of a predetermined length, with means which may facilitate dispersion of the segments obtained from the roving which may be sized or pre-impregnated in such a way as to obtain segments of fibres (6), with means either for displacing the head(s) itself (themselves) or for transporting the segments obtained from the continuous rovings in which way that the mould is filled by substantially horizontal successive layers (7) and that the segments (6, 9) are placed at a precise point in the mould as defined by its coordinates (z, ρ, ϑ) and finally with data means for making the proportion of segments of fibres/rovings (defined by the percentage by volume of one of the two sorts of segments) dependent on the position of the segments in the mould, in order to locally have the desired texture in the friction element, according to one of Claims 1 to 12, in accordance with a pre-established filling program.

20. An apparatus according to Claim 19, wherein two distribution heads are used, one of which is supplied with a roving of sized or pre-impregnated carbon fibre to supply roving segments (9), and the other of which is supplied with a roving of carbon fibre which has been neither sized nor pre-impregnated and which supplies fibre segments (6).

21. An apparatus according to Claim 19, wherein two distribution heads are used, one of which is supplied with a roving of sized or pre-impregnated carbon fibre and which supplies segments of rovings (9), and the other of which is supplied with crushed carbon or carbon precursor fibre and supplies segments of fibres (6).

22. An apparatus according to Claim 19, wherein a distribution head is used which is supplied with a roving of lubricated or pre-impregnated carbon fibre and which supplies segments of roving (9) which are at least equal to 5 mm in length and/or segments of fibres (6) which are less than 5 mm in length at a given place in the mould in dependency on the filling program.

## Patentansprüche

1. Mehrschichtreibelement mit einer Strukturschicht (1) aus Kohlenstoff-Kohlenstoff-Verbundwerkstoff, von der wenigstens eine Seite mit einer Reibschicht (2) aus Kohlenstoff-Kohlenstoff-Verbundwerkstoff bedeckt ist, die mit der Strukturschicht (1) fest verbunden ist, **dadurch gekennzeichnet,**
daß einerseits die Strukturschicht (1) aus einem Fasersubstrat (5g) mit als "grob" bezeichneter Textur erhalten ist, das 10 bis 50 Vol.-% der Schicht (1) darstellt, einen mittleren Porendurchmesser von über 100 »m hat und aus Bündeln aus Kohlenstoffaser oder Kohlenstoffaservorläufer besteht, und daß andererseits die Reibschicht (2) aus einem Fasersubstrat (5f) mit als "fein" bezeichneter Textur erhalten ist, das 3 bis 25 Vol.-% der Schicht (2) darstellt, einen mittleren Porendurchmesser von unter 50 »m aufweist und aus zufällig verteilten Stücken (6) aus Kohlenstoffaser oder Kohlenstoffaservorläufer besteht.

2. Reibelement nach Anspruch 1, bei dem die Strukturschicht (1) aus einem Fasersubstrat (5g) erhalten ist, das aus zufällig verteilten Stücken von Bündeln (9) aus Kohlenstoffaser oder Kohlenstoffaservorläufer besteht.

3. Reibelement nach Anspruch 2, bei dem die Länge des Bündelstücks zwischen 5 und 60 mm und die des Faserstücks zwischen 0,05 und 60 mm liegt.

4. Reibelement nach Anspruch 3, bei dem die Länge des Faserstücks zwischen 1 und 60 mm liegt.

5. Reibelement nach einem der Ansprüche 1 bis 4, bei dem das Fasersubstrat ein ununterbrochenes Gewirr von Bündelstücken (9) in der Strukturschicht (1) bzw. Faserstücken (6) in der Reibschicht (2) bzw. Bündel- und Faserstücken in beliebigen Verhältnissen im Zwischenbereich zwischen der Strukturschicht und der Reibschicht bildet.

6. Reibelement nach Anspruch 1, bei dem das Fasersubstrat (5g) der Strukturschicht (1) ein orientiertes Fasersubstrat (13), typischerweise auf Grundlage von Geweben aus Kohlenstoffaser oder Kohlenstoffaservorläufer, umfaßt.

7. Reibelement nach einem der Ansprüche 1 bis 4 und 6, bei dem das Fasersubstrat (5f) der Reibschicht (2) aus einem Filz oder Vlies aus Kohlenstoffasern oder Kohlenstoffaservorläufer besteht.

8. Reibelement nach einem der Ansprüche 1 bis 7, bei dem die Strukturschicht aus einem komprimierten Fasersubstrat (5g) mit einer scheinbaren Dichte zwischen 0,3 und 0,7 erhalten ist.

9. Reibelement nach einem der Ansprüche 1 bis 8, bei dem die Reibschicht aus einem Fasersubstrat (5f) mit einer scheinbaren Dichte zwischen 0,05 und 0,3 erhalten ist.

10. Reibelement nach einem der Ansprüche 1 bis 4, 6 bis 9, bei dem die Strukturschicht (1) und die Reibschicht (2) durch eine Verbindungsschicht (4) fest verbunden sind.

11. Reibelement nach einem der Ansprüche 1 bis 10, bei dem das Fasersubstrat (5f) der Reibschicht (2) gemahlene Kohlenstoffaser umfaßt, die aus Faserstücken mit einer mittleren Länge zwischen 0,05 und 1 mm besteht.

12. Reibelement nach einem der Ansprüche 1 bis 11, bei dem die Bündel mehr als 1000 Einzelfasern umfassen und die Faserstücke weniger als 100 Einzelfasern umfassen.

13. Verfahren zur Herstellung eines Reibelements aus Mehrschicht-Kohlenstoff-Kohlenstoff-Verbundwerkstoff mit einer Strukturschicht (1) und wenigstens einer Reibschicht (2) nach Anspruch 1, das einen Schritt der Herstellung eines Fasersubstrats in einer gewünschten geometrischen Form, eventuell einen Schritt der Verkohlung, wenn das Fasersubstrat ein Substrat auf Grundlage von Kohlenstoffaservorläufer ist, und einen Schritt der Verdichtung des Fasersubstrats durch Abscheiden von Kohlenstoff zum Bilden der kohlenstoffhaltigen Matrix umfaßt, wobei der Schritt der Herstellung des Fasersubstrats in der gewünschten geometrischen Form **dadurch gekennzeichnet ist, daß** das gesamte Fasersubstrat oder ein Teil davon hergestellt wird, indem in eine Form (10) eventuell mit Hilfe einer Verteilervorrichtung, Stücke von Bündeln aus Kohlenstoffaser oder Kohlenstoffaservorläufer mit einer Länge zwischen 5 und 60 mm eingeführt werden, um das Fasersubstrat (5g) der Strukturschicht (1) zu bilden, und Stücke aus Kohlenstoffaser oder Kohlenstoffaservorläufer mit einer Länge zwischen 0,05 und 60 mm eingeführt werden, um das Fasersubstrat (5f) der Reibschicht (2) zu bilden, dann die Elemente (1) und (2) durch eine Verbindungsschicht (4) zusammengefügt werden und/oder die Bündel- und Faserstücke komprimiert werden, bis eine scheinbare Gesamtdichte zwischen 0,1 und 0,7 erreicht ist.

14. Verfahren nach Anspruch 13, bei dem das Fasersubstrat (5g) mit grober Textur aus einer Lage oder einem Gewebe aus Kohlenstoffaser oder Kohlenstoffaservorläufer oder aus Stücken von Bündeln aus Kohlenstoffaser oder Kohlenstoffaservorläufer mit einer Länge von zwischen 5 und 60 mm erhalten wird, die in eine Form eventuell mit Hilfe einer Verteilervorrichtung eingeführt und dann komprimiert werden, bis eine scheinbare Dichte von zwischen 0,3 und 0,7 erreicht ist.

15. Herstellungsverfahren nach Anspruch 13, bei dem das Fasersubstrat (5f) mit feiner Textur aus einem Vlies oder Filz aus Kohlenstoffaser oder Kohlenstoffaservorläufer oder aus Stücken aus Kohlenstoffaser oder Kohlenstoffaservorläufer mit einer Länge von zwischen 0,05 und 60 mm erhalten wird, die in eine Form (10) eventuell mit Hilfe einer Verteilervorrichtung eingeführt und eventuell komprimiert werden, bis eine scheinbare Gesamtdichte von zwischen 0,1 und 0,7 erreicht ist.

16. Verfahren nach Anspruch 15, bei dem das Fasersubstrat (5f) aus Stücken aus Kohlenstoffaser oder Kohlenstoffaservorläufer mit einer Länge von zwischen 1 und 60 mm erhalten wird.

17. Verfahren nach einem der Ansprüche 13 bis 16, dadurch gekennzeichnet,
daß die Verbindungsschicht (4) durch Komprimieren der Bündel- und Faserstücke erhalten wird, um so ein Fasersubstrat (5f, 5g) mit scheinbarer Gesamtdichte von zwischen 0,1 und 0,7 zu erhalten, das aus verworrenen, zufällig orientierten Stücken von Bündeln und/oder Fasern besteht.

18. Herstellungsverfahren nach einem der Ansprüche 13 bis 17, bei dem die Verteilervorrichtung zum Verteilen der Bündel- oder Faserstücke wenigstens einen Verteilerkopf (8) zum Verteilen der Bündel- oder Faserstücke umfaßt, der sich relativ zur Form (10) bewegt und die gesamte horizontale Oberfläche der Form überstreicht, um fortschreitend und gleichmäßig in aufeinanderfolgenden Schichten die Form mit zufällig orientierten Stücken von Bündeln (9) und/oder Fasern (6) aus Kohlenstoff zu füllen und dabei eine im wesentlichen horizontale Verteilungsebene (7) aufrechtzuerhalten, wobei das relative Verhältnis der von dem oder den Köpfen verteilten Bündel- und/oder Faserstücke vorzugsweise in Abhängigkeit von den Koordinaten (z, ρ, ϑ) des Abschnitts der Verteilungsebene gesteuert wird, der die Bündel- und/oder Faserstücke aufnimmt, um so lokal in der Form in vorgegebener Weise ein Fasersubstrat mit der gewünschten Textur zu erhalten, die nach Kompression von einer feinen Textur mit mittlerem Porendurchmesser unter 50 »m bis zu einer groben Textur mit mittlerem Porendurchmesser von über 100 »m reichen kann.

19. Vorrichtung zum Verteilen von Stücken von Kohlenstoffasern oder -faserbündeln in einer Form, mit einem oder mehreren Verteilerköpfen (8), die aneinanderhängen können, Mitteln zur kontinuierlichen oder schrittweisen Versorgung mit einem oder mehreren Bündeln aus Kohlenstoffasern großer Länge, die geölt oder vorimprägniert sein können, Mitteln zum Schneiden des oder der Bündel in Stücke (6, 9) von vorgegebener Länge, eventuell Mitteln zum Erleichtern des Zerlegens der aus den eventuell geölten oder vorimprägnierten Bündeln erhaltenen Stücke, um Faserstücke (6) zu erhalten, Mitteln zum Bewegen des oder der Köpfe selber oder zum Transport der aus den kontinuierlichen Bündeln erhaltenen Stücke, so daß die Befüllung der Form in aufeinanderfolgenden, im wesentlichen horizontalen Schichten (7) abläuft und die Stücke (6, 9) an einem genauen, durch seine Koordinaten (z, ρ, ϑ) definierten Punkt der Form angeordnet werden, sowie Datenverarbeitungsmitteln zum Steuern des Verhältnisses von Bündel- zu Faserstücken (definiert durch den Volumenprozentsatz einer der zwei Arten von Stücken) am Ort der Segmente in der Form, um so lokal in dem Reibelement nach einem der Ansprüche 1 bis 12 nach einem vorgegebenen Füllprogramm die gewünschte Textur zu erhalten.

20. Vorrichtung nach Anspruch 19, bei der zwei Verteilerköpfe verwendet werden, von denen einer, der mit geöltem oder vorimprägniertem Kohlenstoffaserbündel versorgt wird, Bündelstücke (9) liefert und der andere, der mit einem weder geölten noch vorimprägnierten Kohlenstoffaserbündel versorgt wird, Faserstücke (6) liefert.

21. Vorrichtung nach Anspruch 19, bei der zwei Verteilerköpfe verwendet werden, von denen einer, der mit geölter oder vorimprägnierter Kohlenstoffaser versorgt wird, Bündelstücke (9) liefert und der andere, der mit gemahlenen Kohlenstoffasern oder Kohlenstoffvorläuferfaser versorgt wird, Faserstücke (6) liefert.

22. Vorrichtung nach Anspruch 19, bei der ein Verteilerkopf verwendet wird, der mit geölter oder vorimprägnierter Kohlenstoffaser versorgt wird und an einer gegebenen Stelle der Form und in Abhängigkeit vom Füllprogramm Bündelstücke (9) mit einer Länge von wenigstens 5 mm und/oder Faserstücke (6) mit einer Länge von unter 5 mm liefert.
